# EUROPEAN PATENT APPLICATION

(11) **EP 1 954 075 A1**
(43) Date of publication of application: **06.08.2008**
(21) Application number: 07800780.4
(22) Date of filing: 24.08.2007
(51) Int. Cl.: H04Q 7/30

(54) **METHOD FOR COMBINING UPLINK SIGNALS IN THE SECTOR SPLITTING MODE AND A BASE STATION SYSTEM THEREOF**

(30) Priority: 22.09.2006 CN 200610139757
(71) Applicant: Huawei Technologies Co., Ltd., Longgang District, Shenzhen, Guangdong 518129 (CN)
(72) Inventor: YAO, Jianzhong, Guangdong 518129 (CN)
(74) Representative: Thun, Clemens
(86) International application number: PCT/CN2007/002561
(87) International publication number: WO 2008/034330

(57) **Abstract**

A method for uplink signal combination in the sector splitting mode includes: combining uplink signals transmitted by RRUs into a combined signal, adjusting bandwidth of the combined signal according to a bandwidth limitation of an upper node, and transmitting the combined signal with the bandwidth adjusted to a base band processing unit for further processing. A base station includes: a channel processing card with a base band processing unit, RRUs connected to the channel processing card, a combining unit, adapted to combine the uplink signals transmitted by the RRUs, and a bandwidth adjusting unit arranged in the combining unit, adapted to adjust the bandwidth of the combined signal according to a bandwidth limitation of an upper node. In this way, the uplink signals of RRUs could be combined in the sector splitting mode before being transmitted to a base band processing unit for further processing, so that resource consumption and signal loss can be reduced effectively.

## Description

### Field of the invention

The present invention relates to base station networking technologies in the wireless communication field, and in particular, to a method and base station system for uplink signal combination in sector splitting mode.

### Background of the invention

With the development of the 3rd generation mobile communication technology, the design of a base station tends to adopt the remote radio frequency technique, which separates a radio frequency unit from a Base Band Unit (BBU). As a typical application of the remote radio frequency technique, a Remote Radio Unit (RRU) could solve problems such as the machine room location and the feeder loss, and thus enhance the transmit power of an antenna. On the basis of the remote radio frequency technique, the radio frequency unit is separated from a wireless signal processing unit of a base station, which means that an RRU can be installed far away from a BBU. The remote radio frequency technique provides network operators with unprecedented flexibility on network construction, reduces power consumption of the transmitter as the final part in a base station system by nearly 50%, and decreases transmission line cost and installation cost by 30%-70%.

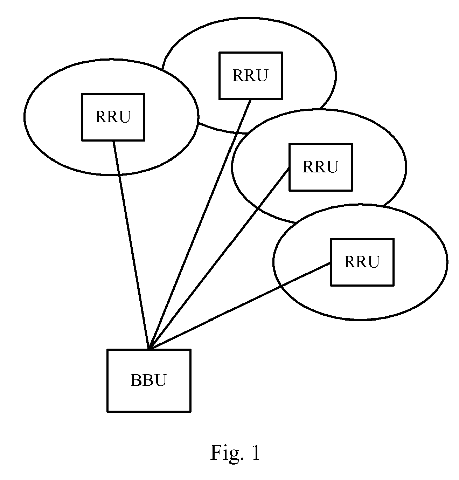

Multiple RRUs are usually deployed to cover different area divisions in a specific geographical area (e.g., indoor coverage). As shown in Figure 1, the coverage mode that different RRUs cover different divisions in a cell is referred to as sector splitting. Digital signals (in-phase/quadrature signals, IQ signals) are used by interfaces between an RRU and BBUs to guarantee the Signal to Noise Ratio (SNR).

The coverage in sector splitting mode is mainly applied to indoor coverage where the radio environment is relatively stable and the antenna receive diversity technique is not normally employed. In the sector splitting mode, each RRU only needs one monopole antenna, and therefore only one unique uplink IQ signal (i.e. A*C signal), which could be determined on the basis of a pair of antenna and carrier is required by each frequency of each RRU. In a WCDMA system, dual-antenna receive diversity is usually adopted, and a BBU can process at least two uplink IQ signals, and the signal bandwidth of each cell in each uplink IQ signal is always Bₘᵢₙ.

The disadvantages of the prior art are:
1. Massive RRUs are not supported according to the prior art, because the uplink signals transmitted by RRUs are not combined. With reference to Figure 1, when there are a great number of RRUs, the uplink signals in the sector splitting mode have to be combined before being transmitted to BBUs for further processing.
2. Problems such as resource consumption and a declined SNR are inevitable when uplink signals are combined by adding two digital signals together. As a result, it is necessary to find a feasible way to combine uplink signals in order to reduce signal loss caused by the combination.

### Summary of the Invention

With regard to the disadvantages of the prior art, the present invention provides a method for uplink signal combination in the sector splitting mode, by which the uplink signals of Remote Radio Units (RRU) could be combined in the sector splitting mode before being transmitted to a base station processing unit for further processing, so that resource consumption and signal loss can be reduced effectively.

With regard to the disadvantages of the prior art, the present invention also provides a base station system for RRU uplink signal combination in the sector splitting mode, so that resource consumption and signal loss can be reduced effectively.

An embodiment of the present invention provides a method for uplink signal combination in the sector splitting mode. The method includes: combining uplink signals transmitted by RRUs into a combined signal, adjusting bandwidth of the combined signals according to a bandwidth limitation of an upper node, and transmitting the combined signal with the bandwidth adjusted to a base band processing unit for further processing.

In the above solution, adjusting bandwidth of a combined signal according to a bandwidth limitation of an upper node includes: determining whether the bandwidth of the combined signal complies with an SNR requirement of the upper node, if the determination is that the bandwidth of the combined signal complies with the SNR requirement of the upper node, the bandwidth is not adjusted; otherwise, the bandwidth of the combined signal is adjusted with a digital gain correction method to make the bandwidth of the combined signal to comply with the SNR requirement of the upper node.

Preferably, combining uplink signals transmitted by RRUs includes: combining, by an RRU, an uplink signal transmitted by a lower node and an uplink signal transmitted by a User equipment (UE). Combining uplink signals transmitted by RRUs may include: combining, by a radio frequency signal switch unit located between the base band processing unit and one of the RRUs, the uplink signal transmitted by the RRUs and received by ports of the radio frequency signal switch unit. Combining uplink signals transmitted by RRUs may include: combining, by a radio frequency signal switch unit located between the base band processing units and one of the RRUs, the uplink signals transmitted by the RRUs and received by ports of the radio frequency signal switch unit. Combining uplink signals transmitted by RRUs may include: combining, by a first channel processing card with a base band processing unit, the uplink signals transmitted by the RRUs and received by ports of the channel processing card. Combining uplink signals transmitted by RRUs may include: combining, by the first channel processing card with the first base band processing unit, signals received from a second channel processing card and the uplink signals transmitted by the RRUs and received by ports of the first channel processing card.

An embodiment of the present invention provides a base station. The base station includes: a channel processing card with a base band processing unit; RRUs connected to the channel processing card; a combining unit, adapted to combine uplink signals transmitted by the RRUs into a combined signal; and a bandwidth adjusting unit arranged in the combining unit and adapted to adjust the bandwidth of the combined signal according to the bandwidth limitation of an upper node.

In the above solution, in the combining unit which is adapted to combine the uplink signals transmitted by RRUs, a bandwidth adjusting unit adapted to adjust the bandwidth of the combined signal according to the bandwidth limitation of the upper node can be configured.

One of the RRUs may include the combining unit adapted to combine the uplink signals transmitted by RRUs. The base station further includes: a radio frequency signal switch unit, connected with the channel processing card and one of the RRUs, and the radio frequency signal switch unit includes the combining unit adapted to combine the uplink signals transmitted by the RRUs. The combining unit adapted to combine the uplink signals transmitted by the RRUs may be arranged in the channel processing card and connected to ports of the channel processing card and the base band processing unit. The combining unit may include: a first combining unit, adapted to combine the uplink signals received by the ports of the channel processing card into a first signal and a second signal. The combining unit may further include: a second combining unit, connected to the first combining unit and the base band processing unit, and is adapted to combine a third signal and a fourth signal transmitted by another channel processing card with the first signal and the second signal into two signals respectively, and the third signal and the fourth signal are generated by combining uplink signals by the another channel processing card for a first time.

As can be seen from the above solution, the uplink signals transmitted by RRUs are combined in an RRU or in a radio frequency signal switch unit or in a channel processing card with a base band processing unit, so that the combination of the uplink signals transmitted by RRUs in the sector splitting mode can be quite flexible in actual hardware resource conditions. In addition, resource consumption and signal loss could be reduced effectively by adjusting the bandwidth of uplink signals transmitted by RRUs, when these signals are combined, according to the bandwidth limitation of the upper node.

To sum up, by the scheme according to the embodiments of the present invention, uplink signals transmitted by RRUs can be combined in the sector splitting mode before being transmitted to a base band processing unit for further processing.

### Brief description of the drawings

Figure 1 is a schematic diagram illustrating the sector splitting coverage mode in the prior art;
Figure 2 is a schematic diagram illustrating a base station system according to a first embodiment of the present invention;
Figure 3 is a schematic diagram illustrating a base station system according to a second embodiment of the present invention;
Figure 4 is a schematic diagram illustrating a base station system according to a third embodiment of the present invention;
Figure 5 is a schematic diagram illustrating a base station system according to a fourth embodiment of the present invention; and
Figure 6 is a schematic diagram illustrating a base station system according to a fifth embodiment of the present invention.

### Detailed description of the invention

A description of the technical scheme in accordance with the present invention is further given in detail in conjunction with the attached drawings and embodiments.

According to the embodiments of the present invention, a combination method is selected flexibly according to hardware resources in the sector splitting mode, and a combining unit corresponding to the combination method is provided to combine the uplink signals transmitted by RRUs in the sector splitting mode. Therefore, a large number of RRUs could be supported by a BBU, and resource consumption and signal loss could be effectively reduced by bandwidth adjustment.

An embodiment of the present invention provides a method for uplink signal combination in the sector splitting mode. The method includes: combining uplink signals transmitted by RRUs into a combined signal, adjusting the bandwidth of the combined signal according to the bandwidth limitation of an upper node, and transmitting the combined signal with the bandwidth adjusted to a base band processing unit in which the combined signal with the bandwidth adjusted is processed.

In a first embodiment of the method in accordance with the present invention for uplink signal combination in the sector splitting mode, the uplink signals transmitted by RRUs are combined into a combined signal, and the combined signal is sent to a base band processing unit for further processing. During the combination of the uplink signals, whether the bandwidth of the combined signal complies with a preset SNR requirement of the upper node is determined, if the bandwidth of the combined signal complies with the preset SNR requirement of the upper node, the bandwidth of the combined signal need not be adjusted; otherwise, the bandwidth of the combined signal is adjusted by digital gain correction method to make the combined signal comply with the preset SNR requirement of the upper node. The first embodiment of the present invention provides a method for combining the uplink signals and adjusting the bandwidth of the uplink signals at the same time, so that resource consumption and signal loss are reduced effectively.

In a second embodiment of the method in accordance with the present invention for uplink signal combination in the sector splitting mode, an RRU receives signals with a monopole antenna; and an uplink signal transmitted by a lower node and an uplink signal transmitted by a UE are combined into a combined signal in the RRU; the bandwidth of the combined signal is adjusted according to the bandwidth limitation of an upper node, and the combined signal with the bandwidth adjusted is transmitted to a base band processing unit for further processing. During the combination of the uplink signal transmitted by the lower node and the uplink signal transmitted by the UE, the RRU may determine whether the uplink signal transmitted by the lower node is an uplink signal of the cell to which the RRU is assigned, if the uplink signal transmitted by the lower node is an uplink signal of the cell to which the RRU is assigned, the uplink signal transmitted by the lower node is combined with the uplink signal transmitted by the UE; otherwise, the uplink signal transmitted by the lower node is transmitted transparently.

In a third embodiment of the method in accordance with the present invention for uplink signal combination in the sector splitting mode, a radio frequency signal switch unit, located between an RRU and a base band processing unit, combines uplink signals transmitted by RRUs and received by the ports of the radio frequency signal switch unit into a combined signal, adjusts the bandwidth of the combined signal according to the bandwidth limitation of an upper node, then transmits the combined signal with the bandwidth adjusted to the base band processing unit for further processing.

In a fourth embodiment of the method in accordance with the present invention for uplink signal combination in the sector splitting mode, a channel processing card with a base band processing unit combines uplink signals transmitted by RRUs and received by the ports of the channel processing card into a combined signal, adjusts the bandwidth of the combined signal according to the bandwidth limitation of an upper node, and transmits the combined signal with the bandwidth adjusted to the base band processing unit for further processing.

Specifically, the channel processing card with the base band processing unit combines the uplink signals transmitted by RRUs and received by the ports of the channel processing card into two combined signals according to a preset combination method.

The preset combination method may be as follows. The channel processing card with the base band processing unit takes an uplink signal received by a first pre-selected port of the channel processing card as a first signal, takes an uplink signal received by a second pre-selected port of the channel processing card as a second signal, and combines uplink signals received by the other ports of the channel processing card with the first signal.

Alternatively, the preset combination method may be as follows. The channel processing card combines uplink signals received by multiple pre-selected ports of the channel processing card into a first signal, and combines uplink signals received by the other ports of the channel processing card into a second signal. The number of the pre-selected ports to receive the uplink signals should be less than the total number of ports on the channel processing card.

In a fifth preferred embodiment of the method in accordance with the present invention for uplink signal combination in the sector splitting mode, uplink signals transmitted by RRUs are combined between different channel processing cards with base band processing units into a combined signal, and the bandwidth of the combined signal is adjusted according to the bandwidth limitation of an upper node, then the combined signal with the bandwidth adjusted is transmitted to the base band processing units for further processing.

Specifically, a first channel processing card with a base band processing unit receives two uplink signals, i.e., a third signal and a fourth signal, from a second channel processing card via cables; and the two uplink signals are generated by combining uplink signals transmitted by RRUs for a first time in the second channel processing card. The first channel processing card combines the third signal and the fourth signal with a first signal and a second signal respectively; in which the first signal and the second signal are generated by combining uplink signals transmitted by the RRUs for a first time in the first channel processing card. In details, the first channel processing card combines the third signal with the first signal, and combines the fourth signal with the second signal.

In the second to fifth embodiment of the present invention, different methods for uplink signal combination are provided. The uplink signals transmitted by RRUs may be combined in an RRU or in a radio frequency signal switch unit or in a channel processing card with a base band processing unit, so that several combination methods on the basis of different hardware complexities are provided to fulfill different environment requirements.

Moreover, any combination of the combination methods according to the second to fifth embodiments described above could support greater amount of RRUs, so as to satisfy different environment requirements.

Further, according to the second to fifth embodiments described above, when adjusting the bandwidth of combined signals according to the bandwidth limitation of the upper node, whether the bandwidth of the combined signal complies with a preset SNR requirement of an upper node may be determined; if the bandwidth of the combined signal complies with the preset SNR requirement of the upper node, the bandwidth of the combined signal need not be adjusted; otherwise, the bandwidth of the combined signal is adjusted by a digital gain correction method to make the bandwidth of the combined signal to comply with the preset SNR requirement of the upper node. In this way, resource consumption and signal loss could be effectively reduced.

On the basis of the methods for uplink signal combination in the sector splitting mode described above, the present invention provides a base station system. The base station system includes a channel processing card with a base band processing unit, RRUs connected to the channel processing card, and a combining unit adapted to combine the uplink signals transmitted by RRUs into a combined signal.

In order to reduce resource consumption and signal loss, a bandwidth adjusting unit adapted to adjust the bandwidth of the combined signal according to the bandwidth limitation of an upper node can be configured in the combining unit.

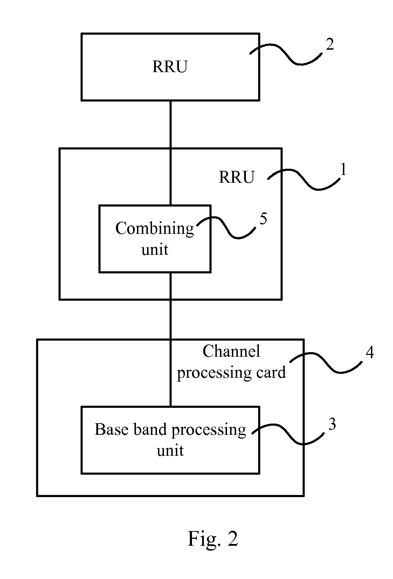

Figure 2 is a schematic diagram illustrating a base station system according to a first embodiment of the present invention. The base station system includes an RRU 1, an RRU 2, and a channel processing card 4 with a base band processing unit 3. The RRU 2 is a lower node of the RRU 1 and is connected to the RRU 1. In the RRU1, a combining unit 5 adapted to combine uplink signals transmitted by lower RRUs is provided. When the RRU 1 receives an uplink signal transmitted by the RRU 2, the combining unit 5, which is adapted to combine uplink signals transmitted by the RRU 2, combines the uplink signal transmitted by the RRU 2 and an uplink signal received by the RRU 1 from a UE into a combined signal, and transmits the combined signal to the base band processing unit 3 via the channel processing card 4.

When the RRU 1 receives the uplink signal transmitted by the RRU 2, the combining unit 5, which is adapted to combine uplink signals transmitted by the RRU 2, may determine whether the uplink signal is an uplink signal of the cell assigned by the RRU 1; if the uplink signal is an uplink signal of the cell assigned by the RRU 1, the combining unit 5 combines the uplink signal transmitted by the RRU 2 and an uplink signal sent by a UE and received by the RRU 1 into a combined signal, and transmits the combined signal to the base band processing unit 3 via the channel processing card 4; otherwise, the combining unit 5 transmits the uplink signal transmitted by the RRU 2 transparently.

A bandwidth adjusting unit, which is adapted to adjust the bandwidth of a combined signal according to the bandwidth limitation of an upper node (i.e. the channel processing card 4 with the base band processing unit 3 in this embodiment), may be configured in the combining unit 5 which is adapted to combine the uplink signals transmitted by the RRUs. The bandwidth adjusting unit can determine whether the bandwidth of the combined signal complies with the preset SNR requirement of the upper node. If the bandwidth of the combined signal complies with the preset SNR requirement of the upper node, the bandwidth of the combined signal need not be adjusted; otherwise, the bandwidth adjusting unit adjusts the bandwidth of the combined signal by digital gain correction method to make the combined signal to comply with the preset SNR requirement of the upper node.

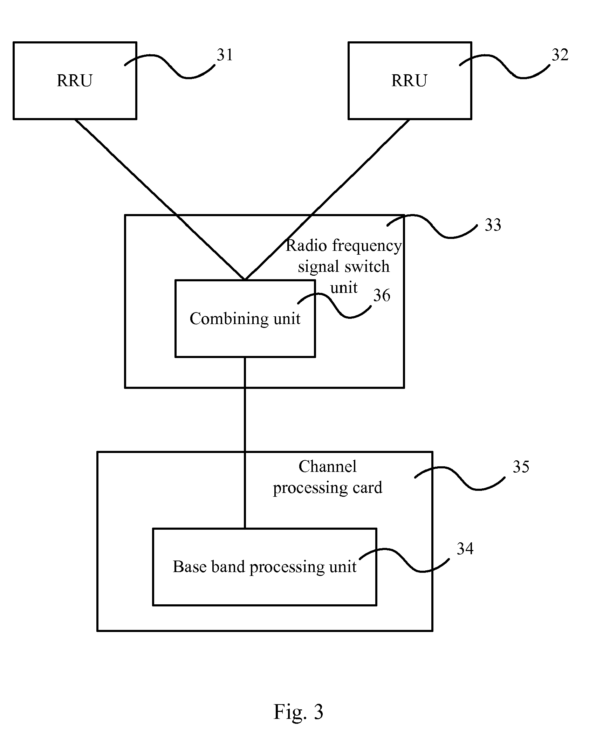

Figure 3 is a schematic diagram illustrating a base station system according to a second preferred embodiment of the present invention. The base station system includes an RRU 31, an RRU 32, a radio frequency signal switch unit 33, and a channel processing card 35 with a base band processing unit 34. In the radio frequency signal switch unit 33, there is a combining unit 36, which is adapted to combine uplink signals transmitted by the RRUs. When the radio frequency signal switch unit 33 receives uplink signals transmitted by the RRU 31 and the RRU 32, the combining unit 36 combines the uplink signals to a combined signal, and transmits the combined signal to the base band processing unit 34 via the channel processing card 35. A bandwidth adjusting unit, which is adapted to adjust the bandwidth of the combined signal according to the bandwidth limitation of an upper node (i.e. a channel processing card 4 with the base band processing unit 3 in this embodiment), may also be configured in the combining unit 36.

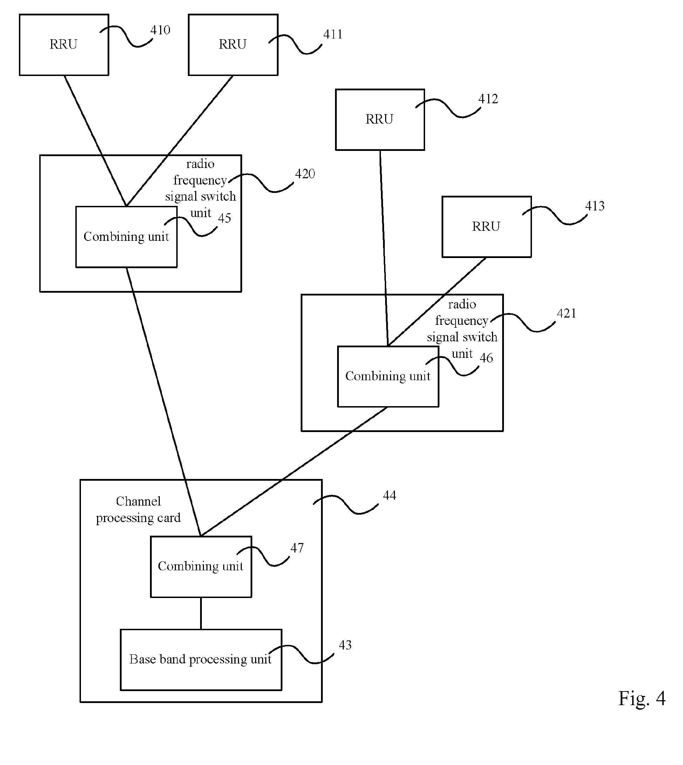

Figure 4 is a schematic diagram illustrating a base station system according to a third preferred embodiment of the present invention. The base station system includes an RRU 410, an RRU 411, an RRU 412, an RRU 413, a radio frequency signal switch unit 420, a radio frequency signal switch unit 421, and a channel processing card 44 with a base band processing unit 43. A combining unit 45 is arranged in the radio frequency signal switch unit 420, and is adapted to combine the uplink signals transmitted by the RRUs. A combining unit 46 is arranged in the radio frequency signal switch unit 421. A combining unit 47 is arranged in the channel processing card 44. When the radio frequency signal switch unit 420 receives uplink signals transmitted by the RRU 410 and the RRU 411, the combining unit 45 combines the uplink signals to a combined signal, and transmits the combined signal to the channel processing card 44. When the radio frequency signal switch unit 421 receives uplink signals transmitted by the RRU 412 and the RRU 413, the combining unit 46 combines the uplink signals to a combined signal, and transmits the combined signal to the channel processing card 44. When the channel processing card 44 receives uplink signals transmitted by the radio frequency signal switch unit 420 and the radio frequency signal switch unit 421, the combining unit 47 combines the uplink signals to a combined signal, and transmits the combined signal to the base band processing unit 43.

When three or more ports of the channel processing card 44 receive uplink signals transmitted by the radio frequency signal switch units or the RRUs, the combining unit 47 of the channel processing card 44 can adopt a preset combination method to combine the uplink signals received by the ports of the channel processing card 44 into two signals. For example, the preset combination method can be that the uplink signal received by a pre-selected port of the channel processing card 44 is taken as signal A, the uplink signal received by another port of the channel processing card 44 is taken as signal B, and the uplink signals received by the other ports of the channel processing card 44 are combined with the signal A or the signal B.

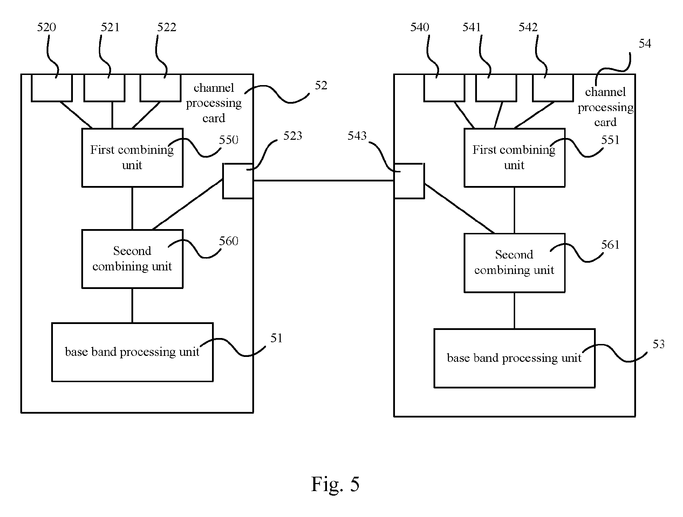

Figure 5 is a schematic diagram illustrating a base station system according to a fourth preferred embodiment of the present invention. The uplink signal combination between a channel processing card 52 with a base band processing unit 51 and a channel processing card 54 with a base band processing unit 53 is illustrated in Figure 5. The channel processing card 52 includes a port 520, a port 521 and a port 522. The channel processing card 54 includes a port 540, a port 541 and a port 542. A port 523 of the channel processing card 52 is connected with a port 543 of the channel processing card 54. The channel processing card 52 includes a first combining unit 550 and a second combining unit 560. The channel processing card 54 includes a first combining unit 551 and a second combining unit 561. The first combining unit 550 is adapted to combine uplink signals received by the port 520, the port 521 and the port 522 of the channel processing card 52. The first combining unit 551 is adapted to combine uplink signals received by the port 540, the port 541 and the port 542 of the channel processing card 54. The second combining unit 560 is adapted to combine the signals transmitted by the first combining unit 550 of the channel processing card 52, and the signals transmitted by the first combining unit 551 of the channel processing card 54 and received by the port 523, into two signals. For example, the second combining unit 560 combines a signal A transmitted by the first combining unit 550, and a signal A transmitted by the first combining unit 551 and received by the port 523 into a signal, and combine a signal B transmitted by the first combining unit 550, and a signal B transmitted by the first combining unit 551 and received by the port 523 into a signal, and transmit the two signals to the base band processing unit 51 for further processing. Similarly, the second combining unit 561 is adapted to combine a signal transmitted by the first combining unit 551 of the channel processing card 54, and a signal transmitted by the first combining unit 550 of the channel processing card 52 and received by the port 543, into two signals, and transmits the two signals to the base band processing unit 53 for further processing.

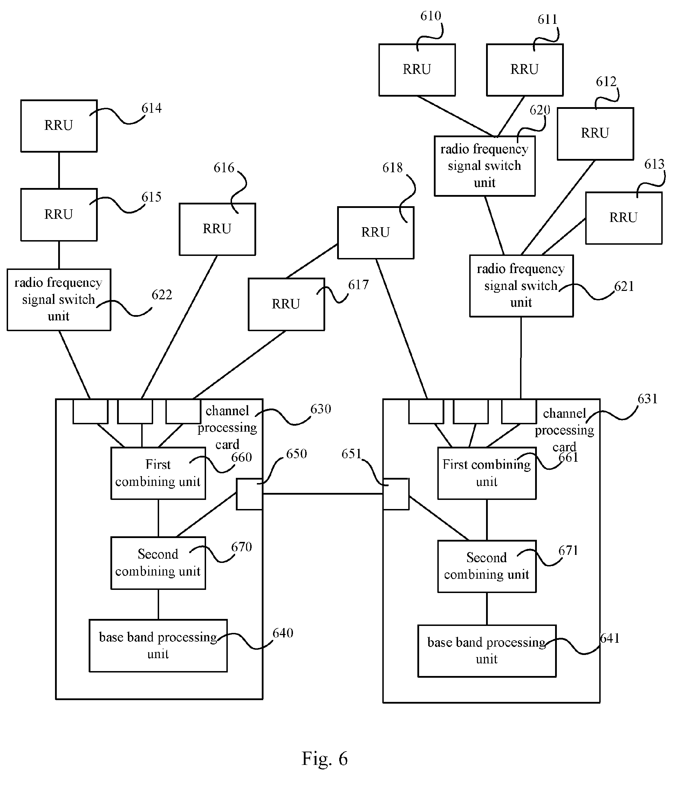

Figure 6 is a schematic diagram illustrating a base station system according to a fifth preferred embodiment of the present invention. The base station system includes an RRU 610, an RRU 611, a radio frequency signal switch unit 620 which is connected to the RRU 610 and the RRU 611, an RRU 612, an RRU 613, a radio frequency signal switch unit 621 which is connected to the radio frequency signal switch unit 620 and the RRU 612 and the RRU 613, an RRU 614, an RRU 615 which is connected to the RRU 614, a radio frequency signal switch unit 622 which is connected to the RRU 615, an RRU 616, an RRU 617, an RRU 618 which is connected to the RRU 617, a channel processing card 630 which is connected to the radio frequency signal switch unit 622 and the RRU 616 and the RRU 617, a channel processing card 631 which is connected to the RRU 618 and the radio frequency signal switch unit 621. A base band processing unit 640 is configured on the channel processing card 630. A base band processing unit 641 is configured on the channel processing card 631. A port 650 of the channel processing card 630 is connected to a port 651 of the channel processing card 631 via a cable. A combining unit (not shown in figure 6), which is arranged in the radio frequency signal switch unit 620, is adapted to combine uplink signals transmitted by the RRU 610 and the RRU 611; a combining unit (not shown in figure 6), which is arranged in the radio frequency signal switch unit 621, is adapted to combine uplink signals transmitted by the radio frequency signal switch unit 620 and the RRU 612 and the RRU 613; a combining unit (not shown in figure 6), which is arranged in the RRU 615, is adapted to combine the uplink signals transmitted by the RRU 614 and a user equipment; a combining unit (not shown in figure 6), which is arranged in the radio frequency signal switch unit 622, is adapted to combine the uplink signals transmitted by the RRU 615; a first combining unit 660, which is arranged in the channel processing card 630, is adapted to combine the uplink signals transmitted by the radio frequency signal switch unit 622 and the RRU 616 and the RRU 617; a first combining unit 661, which is arranged in the channel processing card 631, is adapted to combine uplink signals transmitted by the RRU 618 and the radio frequency signal switch unit 621; a second combining unit 670, which is arranged in the channel processing card 630, is adapted to combine signals outputted by the first combining unit 660 and signals transmitted by the channel processing card 631 and received by the port 650; for example, the second combining unit 670 could combine a signal A transmitted by the channel processing card 631 with a signal A which has already been combined once by the channel processing card 630, and combine a signal B transmitted by the channel processing card 631 with a signal B which has already been combined once by the channel processing card 630; similarly, a second combining unit 671, which is arranged in the channel processing card 631, is adapted to combine signals outputted by the first combining unit 661 and signals which are transmitted by the channel processing card 630 and received by the port 651.

According to the base station systems provided by the third to fifth preferred embodiment of the present invention, a bandwidth adjusting unit, which is arranged in the RRUs and/or in the radio frequency signal switch units, is adapted to adjust the bandwidth of a combined signal according to the bandwidth limitation of an upper node, so that resource consumption and signal loss are reduced effectively.

In addition, those skilled in the art could adopt the setting and combination methods of the combining unit proposed by this invention with flexibility, in accordance with the actual hardware resource conditions, which should be covered in the protection scope of the invention.

The above is the description of the exemplary embodiments of the present invention. The method and the system of the present invention can be modified appropriately during a specific implementation, to meet the specific requirements of the specific cases. It is thereby understood that the exemplary embodiments according to the present invention are just demonstrative of, but not limitative to the protection scope of the present invention.

## Claims

1. A method for uplink signal combination in a sector splitting mode, comprising:
combining uplink signals transmitted by Remote Radio Units, RRUs, into a combined signal;
adjusting bandwidth of the combined signal according to a bandwidth limitation of an upper node; and
transmitting the combined signal with the bandwidth adjusted to a base band processing unit for further processing.

2. The method of claim 1, wherein adjusting the bandwidth of the combined signal according to a bandwidth limitation of an upper node comprises:
determining whether the bandwidth of the combined signal complies with a Signal Noise Ratio, SNR requirement of the upper node, if the determination is that the bandwidth of the combined signal comply with the SNR requirement of the upper node, not adjusting the bandwidth of the combined signal; if the determination is that the bandwidth of the combined signal does not comply with the SNR requirement of the upper node, adjusting the bandwidth of the combined signal to make the bandwidth of the combined signal to comply with the SNR requirement of the upper node.

3. The method of claim 1, wherein combining uplink signals transmitted by RRUs comprises:
combining, by an RRU, an uplink signal transmitted by a lower node and an uplink signal transmitted by a User Equipment, UE.

4. The method of claim 3, wherein combining uplink signals transmitted by RRUs comprises:
combining, by a radio frequency signal switch unit located between the base band processing unit and one of the RRUs, the uplink signals transmitted by the RRUs and received by ports of the radio frequency signal switch unit.

5. The method of claim 1, wherein combining uplink signals transmitted by RRUs comprises:
combining, by a radio frequency signal switch unit located between the base band processing unit and one of the RRUs, the uplink signals transmitted by the RRUs and received by ports of the radio frequency signal switch unit.

6. The method of any one of claims 1 to 5, wherein combining uplink signals transmitted by RRUs comprises:
combining, by a first channel processing card with a first base band processing unit, the uplink signals transmitted by the RRUs and received by ports of the first channel processing card.

7. The method of claim 6, wherein combining uplink signals transmitted by RRUs further comprises:
combining, by the first channel processing card with the first base band processing unit, signals received from a second channel processing card and the uplink signals transmitted by the RRUs and received by ports of the first channel processing card.

8. The method of claim 3, further comprising:
before combining by an RRU an uplink signal transmitted by a lower node and an uplink signal transmitted by a UE,
determining, by the RRU, whether the uplink signal transmitted by the lower node is an uplink signal of the cell to which the RRU is assigned; if determining that the uplink signal transmitted by the lower node is an uplink signal of the cell to which the RRU is assigned, combining the uplink signal transmitted by the lower node and the uplink signal transmitted by the UE; otherwise, transmitting the uplink signal transparently.

9. The method of claim 6, wherein combining by a first channel processing card with a first base band processing unit the uplink signals transmitted by the RRUs and received by ports of the first channel processing card comprises:
combining, by a first channel processing card with a first base band processing unit, the uplink signals transmitted by the RRUs and received by ports of the first channel processing card into two signals according to a combination method.

10. The method of claim 9, wherein the combination method comprises:
taking an uplink signal received by a first port of the first channel processing card as a first signal, taking an uplink signal received by a second port of the first channel processing card as a second signal, and combining uplink signals received by the other ports of the first channel processing card with the first signal.

11. The method of claim 9, wherein the combination method comprises:
combining uplink signals received by one or more ports of the first channel processing card into a first signal, and combining the uplink signals received by the other ports of the first channel processing card into a second signal.

12. The method of claim 7, wherein combining by the first channel processing card with the first base band processing unit signals received from a second channel processing card and the uplink signals transmitted by the RRUs and received by ports of the first channel processing card comprises:
receiving, by the first channel processing card with the first base band processing unit, a third signal and a fourth signal from a second channel processing card via cables, wherein the third signal and the fourth signal are generated by combining uplink signals transmitted by the RRUs for a first time in the second channel processing card;
combining, by the first channel processing card, the third signal with a first signal, the fourth signal with a second signal; wherein the first signal and the second signal are generated by combining uplink signals transmitted by the RRUs for a first time in the first channel processing card.

13. A base station system, comprising:
a channel processing card with a base band processing unit;
RRUs connected to the channel processing card;
a combining unit, adapted to combine uplink signals transmitted by the RRUs into a combined signal; and
a bandwidth adjusting unit arranged in the combining unit, adapted to adjust bandwidth of the combined signal according to a bandwidth limitation of an upper node.

14. The base station system of claim 13, wherein one of the RRUs includes the combining unit.

15. The base station system of claim 13, further comprising:
a radio frequency signal switch unit, connected with the channel processing card and one of the RRUs, wherein the radio frequency signal switch unit includes the combining unit.

16. The base station system of claim 14, further comprising:
a radio frequency signal switch unit, connected with the channel processing card and one of the RRUs, wherein the radio frequency signal switch unit includes the combining unit.

17. The base station system of any one of claims 13 to 16, wherein the combining unit is arranged in the channel processing card, and connected to ports of the channel processing card and the base band processing unit.

18. The base station system of claim 17, wherein the combining unit arranged in the channel processing card comprises:
a first combining unit, adapted to combine the uplink signals received by the ports of the channel processing card into a first signal and a second signal.

19. The base station system of claim 18, wherein the combining unit arranged in the channel processing card further comprises:
a second combining unit, connected to the first combining unit and the base band processing unit, adapted to combine a third signal and a fourth signal transmitted by another channel processing card with the first signal and the second signal into two signals respectively, wherein the third signal and the fourth signal are generated by combining uplink signals by the another channel processing card for a first time.
